(19) Europäisches Patentamt
European Patent Office
Office européen des brevets

(11) **EP 4 620 610 A1**

(12) **EUROPEAN PATENT APPLICATION**
published in accordance with Art. 153(4) EPC

(43) Date of publication:
**24.09.2025 Bulletin 2025/39**

(51) International Patent Classification (IPC):
**B23K 26/21** (2014.01)     **B23K 26/38** (2014.01)

(21) Application number: **23914728.3**

(52) Cooperative Patent Classification (CPC):
**B23K 26/21; B23K 26/38**

(22) Date of filing: **24.11.2023**

(86) International application number:
**PCT/JP2023/042233**

(87) International publication number:
**WO 2024/147240 (11.07.2024 Gazette 2024/28)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.01.2023 JP 2023000225**

(71) Applicant: **JFE Steel Corporation
Tokyo 100-0011 (JP)**

(72) Inventors:
• **HARA, Asato
Tokyo 100-0011 (JP)**
• **TAKASHIMA, Katsutoshi
Tokyo 100-0011 (JP)**

(74) Representative: **Hoffmann Eitle
Patent- und Rechtsanwälte PartmbB
Arabellastraße 30
81925 München (DE)**

(54) **LASER WELDING METHOD AND METHOD FOR MANUFACTURING LASER WELDED JOINT**

(57) To provide a method for laser welding with which a laser-welded joint or a tailor welded blank with high quality can be manufactured. The method for laser welding includes cutting each of two steel plates to be butt-welded by using a laser beam and butt-welding the two steel plates cut by using the laser beams. The cutting cuts such that an angle of a cut surface of one of the steel plates is $\theta$ (deg) and an angle of a cut surface of the other one of the steel plates is $180 - \theta$ (deg), and the $\theta$ satisfies following Expression (1):

$$55.0 \leq \theta < 70.0 \quad (1).$$

**FIG. 4**

EP 4 620 610 A1

**Description**

Technical Field

The present invention relates to a method for laser welding and a method for manufacturing a laser-welded joint.

Background Art

In manufacturing an automotive body, a tailor welded blank in which steel plates having different plate thicknesses and strengths are welded in advance may be adopted as a press material. The tailor welded blank is a kind of a welded joint, and can partially change characteristics of a single material and can also be expected to reduce the number of parts. Thus, the tailor welded blanks are often used for manufacturing parts with high efficiency, in particular, in manufacturing an automotive body.

However, in manufacturing of the tailor welded blank, butt welding over 1 m or more may be required in some cases, and the variation of a butt gap when the steel plates are butted against each other, that is, a gap between the butted surfaces of the plates may adversely affect a performance of the welded parts.

Thus, in order to ensure the butting accuracy between the steel plates to be welded, end surfaces of the steel plates are sheared immediately before the manufacturing of the tailor welded blank. A mechanical shearing machine is mainly used for the shearing.

Since the butt gap is reduced by the shearing, parts with a welding quality equal to or higher than a certain level can be produced.

Citation List

Patent Literature

Patent Literature 1: JP 2012-135796 A

Summary of Invention

Technical Problem

However, in the shearing by a mechanical shearing machine, when a warpage of the steel plate is not uniform in a coil width direction, a dimensional error may occur in a plate width direction, and a butt gap in welding may vary in the coil width direction. Further, when a blade of the shearing machine is worn, a "shear droop" or "burr" is generated, and the butt gap of the portion with the shear droop or burr varies to adversely affect a performance of parts.

Patent Literature 1 proposes a method for improving welding quality by angling cut surfaces of steel plates to be butted against each other using a cutting tool and performing welding. However, a cutting angle is 20° or less due to a dimensional machining limit of the cutting tool, and the angle of 20° or less provides an insufficient overlap in the butting, which makes it difficult to obtain a sufficient effect of suppressing the variation of the butt gap.

In view of such problems, it is an object of the present invention to provide a method for laser welding with which a sufficient effect of suppressing the variation of butt gap can be obtained by a laser cutting method having no machining limit.

Solution to Problem

In the present invention, first, attention is paid to the shearing process before welding, that is, cutting process of plates. Typically, shearing of plates has been performed by mechanical shearing machines. However, in a case of producing an oblique cut end surface by a contact-type machining method, only an end surface having an angle of 20° or less can be produced because a tool slips off from a steel plate. Thus, in the present invention, in order to solve the above-mentioned problem, cutting by a non-contact thermal processing using a laser beam is applied to an end surface instead of contact-type machining before the laser welding. This enables to perform cutting more obliquely with respect to a plate thickness direction than the machining, which provides a reduction in variation of the butt gap in a direction perpendicular to both a direction of the laser beam for welding and a welding direction. The reduction in variation of the butt gap enables manufacturing of laser-welded joints and tailor welded blanks with higher quality. In addition, non-contact processing generates no wear of a tool and cutting can be performed with little variation due to continuous operation and little variation in respective portions in the welding direction in one laser cutting. This enables production of tailor welded blanks with high quality.

The present invention has been completed based on the above-mentioned findings and the gist thereof is as follows.

[1] A method for laser welding which includes cutting each of two steel plates to be butt-welded by using a laser beam, and butt-welding the two steel plates cut by using the laser beams. The cutting cuts such that an angle of a cut surface of one of the steel plates is (deg) and an angle of a cut surface of the other one of the steel plates is 180 - θ (deg) and the θ satisfies Expression (1)

$$55.0 \leq \theta < 70.0 \quad (1).$$

When the two steel plates to be butt-welded have different plate thicknesses, the angle of the cut surface of the steel plate having a thinner plate thickness is θ (deg), and when the two steel plates have an identical plate thickness, the angle of the cut surface of either one the steel plates is θ (deg).

[2] The method for laser welding according to [1], in which the plate thickness t (mm) of the steel plate having the thinner plate thickness among the two steel plates to be butt-welded or, when the two steel plates have the identical plate thickness, the plate thickness t (mm) of both the two steel plates satisfies Expression (2)

$$0.6 \leq t \leq 3.2 \quad (2).$$

[3] The method for laser welding according to [1], in which the laser welding is performed such that a welded portion of the laser welding satisfies following Expression (3)

$$1.2w \geq t/\tan \theta \quad (3),$$

where w is a melting width (mm) and t is the plate thickness (mm) of the steel plate having the thinner plate thickness among the two steel plates to be butt-welded or, when the two steel plates have an identical plate thickness, the plate thickness (mm) of both the two steel plates.

[4] The method for laser welding according to [2], in which the laser welding is performed such that a welded portion of the laser welding satisfies following Expression (3)

$$1.2w \geq t/\tan \theta \quad (3),$$

where w is a melting width (mm).

[5] The method for laser welding according to [1], in which the butt-welding includes, when the two steel plates to be butt-welded have different plate thicknesses, arranging the steel plates in a horizontal direction to butt with each other while positioning a portion with an acute angle in a cross section of the steel plate having a thicker plate thickness and a portion with an obtuse angle in a cross section of the steel plate having the thinner plate thickness at lower sides of the respective steel plates and aligning heights of lower surfaces of the steel plates, and then welding the steel plates by irradiating a laser beam from an upper side in a vertical direction while aiming at a position of a center of the plate thickness of the butted surface of the steel plate having the thinner plate thickness.

[6] The method for laser welding according to [2], in which the butt-welding includes, when the two steel plates to be butt-welded have different plate thicknesses, arranging the steel plates in a horizontal direction to butt with each other while positioning a portion with an acute angle in a cross section of the steel plate having a thicker plate thickness and a portion with an obtuse angle in a cross section of the steel plate having the thinner plate thickness at lower sides of the respective steel plates and aligning heights of lower surfaces of the steel plates, and then welding the steel plates by irradiating a laser beam from an upper side in a vertical direction while aiming at a position of a center of the plate thickness of the butted surface of the steel plate having the thinner plate thickness.

[7] A method for manufacturing a laser-welded joint which includes manufacturing the laser-welded joint by using the method for laser welding according to any one of [1] to [6].

[8] The method for manufacturing the laser-welded joint according to [7], in which the laser-welded joint is a tailor welded blank.

Advantageous Effects of Invention

According to the present invention, variation in the butt gap in a direction perpendicular to both a direction of a laser beam for welding and a welding direction (a direction perpendicular to a cut surface when a cutting angle is 90°) can be suppressed, and a laser-welded joint, in particular, a tailor welded blank, can be manufactured with a high quality.

Brief Description of Drawings

FIG. 1 is a perspective view illustrating an example of laser cutting process of steel plates according to the present invention.
FIG. 2 is a cross-sectional view illustrating an example of the laser cutting process of steel plates according to the present invention.
FIG. 3 is a perspective view illustrating an example of laser welding process of steel plates according to the present invention.
FIG. 4 is a cross-sectional view illustrating an example of the laser welding process of steel plates according to the present invention.
FIG. 5 is a view illustrating a position of the laser welding according to the present invention.
FIG. 6 is a view illustrating details of a butted cross section before welding.
FIG. 7 is a schematic view of a state in which incomplete melting is generated at a butted cross section after welding.
FIG. 8 is a view illustrating details of butted cross section after welding.

Description of Embodiments

Hereinafter, a method for laser welding and a method for manufacturing a laser-welded joint according to the present invention will be described with reference to the drawings. Note that the present invention is not limited to this embodiment.
According to the present invention, there is a method for laser welding including cutting two steel plates to be butt-welded by using a laser beam of a laser beam cutting machine, which will be described later, butt-welding the two steel plates by using a laser beam welding machine, which will be described later, and thus manufacturing a laser-welded joint, which will be described later.

Laser Beam Cutting Machine

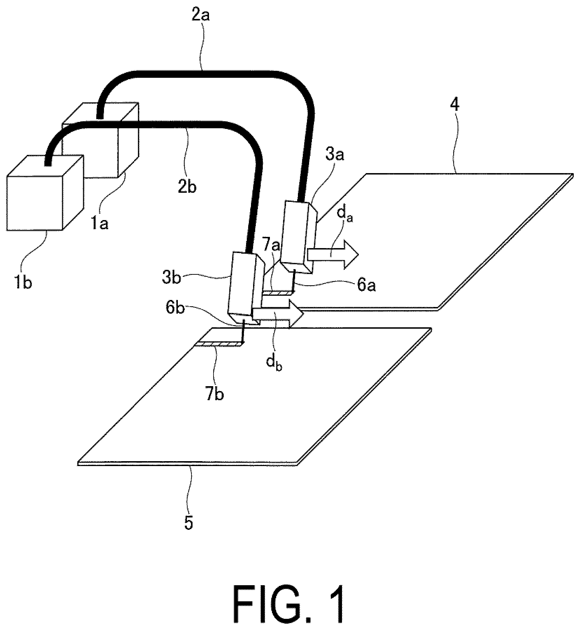

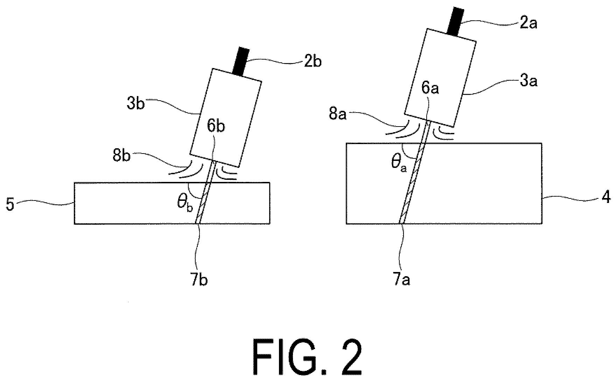

As illustrated in FIGS. 1 and **2,** a laser beam cutting machine for carrying out the method for laser welding according to the present invention includes two laser oscillators 1a and 1b each of which oscillates a laser beam, transmission systems 2a and 2b that transmit the laser beams from the two oscillators, and machining heads for cutting 3a and 3b, which are connected to the two transmission systems, respectively, for machining metal plates by using the beams. The laser beam cutting machine cuts a steel plate 4 and a steel plate 5, which face each other with a gap, by irradiating the steel plate 4 and the steel plate 5 with laser beams for cutting 6a and 6b from the machining heads for cutting 3a and 3b to form cut portions 7a and 7b, respectively. Further, the laser beam cutting machine that can be used in the present invention can form the cut portions 7a and 7b with angles $\theta_a$ and $\theta_b$ by obliquely irradiating the steel plate 4 and the steel plate 5 with the laser beams for cutting 6a and 6b, respectively. At the time of cutting, assist gases 8a and 8b are injected from the machining heads for cutting 3a and 3b, respectively. In FIG. 1, the two machining heads for cutting 3a and 3b cut the steel plate 4 and the steel plate 5 by irradiating the steel plate 4 and the steel plate 5 with the laser beams while moving in cutting directions $d_a$ and $d_b$, respectively. Note that in order to simplify the machine, the laser beam cutting machine may have a configuration in which only one oscillator is provided and a laser beam is divided into two systems, or a case in which both steel plates are cut with the same head may be considered. As the laser beam cutting machine, for example, a fiber laser can be used. When a laser beam is divided into a plurality of systems, an output of the laser beam can be set to, for example, 2.0 to 8.0 kW in each of the systems.

Laser Beam Welding Machine

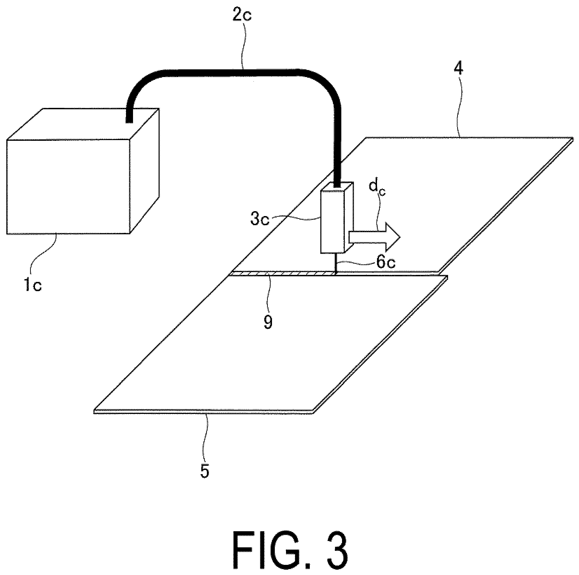

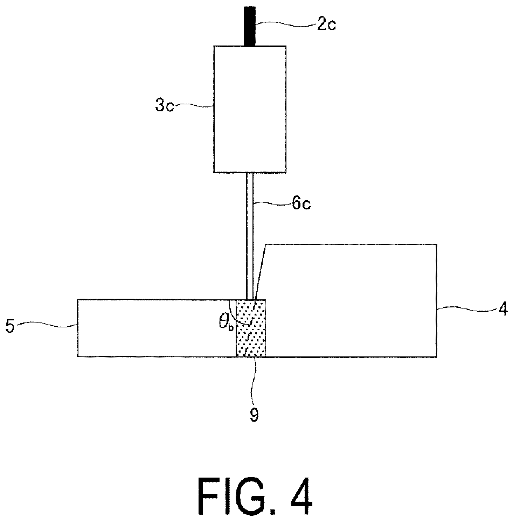

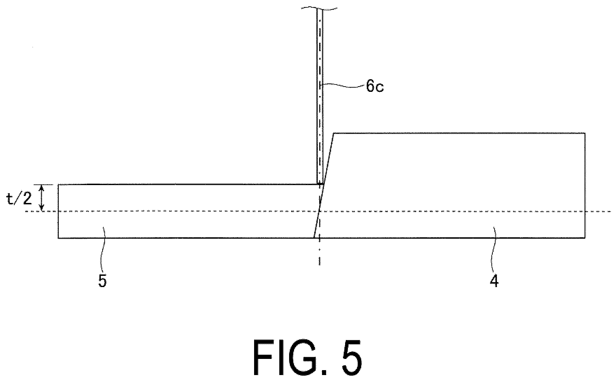

As illustrated in FIGS. 3 and 4, a laser beam welding machine for carrying out the method for laser welding according to the present invention includes a laser oscillator 1c that oscillates another laser beam different from the laser beams for cutting, a transmission system 2c that transmits the other laser beam, and a machining head for welding 3c that machines metal plates by using the other laser beam. The laser beam welding machine has a function of forming a welded portion 9 between the steel plate 4 and the steel plate 5 butted against each other after the cutting process by irradiating the laser beam for welding 6c from the machining head for welding 3c in a direction perpendicular to the surfaces while moving in a welding direction $d_c$. At this time, when the two steel plates to be butt-welded have different plate thicknesses, it is preferable that the two steel plates are arranged in a horizontal direction to butt with each other while positioning a portion with an acute angle in a cross section of a steel plate having a thicker plate thickness and a portion with an obtuse angle in a cross section of a steel plate having a thinner plate thickness at lower sides of respective steel plates and aligning heights of lower surfaces of the steel plates. Further, as illustrated in FIG. 5, an irradiation position of the laser beam for welding 6c by the laser beam welding machine that can be used in the present invention is set on the oblique butted surfaces and in the center of a plate thickness of the steel plate 5 having the thinner plate thickness among the steel plate 4 and the steel plate 5, and the laser beam is irradiated aiming at this position from the upper side in the vertical direction. Note that in order to simplify the machine, the oscillator of the laser beam welding machine may be the same as the oscillator of the laser beam cutting machine, and in this case, the laser beam may be divided into three systems in total of two systems for cutting and one system for welding, or two systems in total of one system for cutting and one system for welding. As the laser beam welding machine, for example, a fiber laser can be used. When a laser beam is divided into a plurality of systems, an output of the laser beam can be set to, for example, 2.0 to 8.0 kW in each of the systems.

Method for Laser Welding

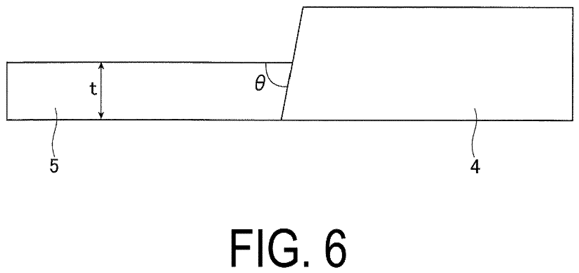

In the embodiment of the method for laser welding according to the present invention, cutting is performed such that an angle of the butted cross section of the steel plate before welding, as illustrated in FIG. 6, satisfies a condition within a range of $\theta$ expressed by the following Expression (1). Further, in the embodiment of the method for laser welding, a plate thickness t preferably satisfies a condition within a range expressed by the following Expression (2).

$$55.0 \leq \theta < 70.0 \quad (1)$$

$$0.6 \leq t \leq 3.2 \quad (2)$$

Note that, when the two steel plates to be butt-welded have different plate thicknesses, the angle of the cut surface of the steel plate having a thinner plate thickness is $\theta$ (deg), and when the two steel plates have an identical plate thickness, the angle of one of cut surfaces of the two steel plates is $\theta$ (deg). In addition, t is the plate thickness (mm) of the steel plate having thinner plate thickness among the two steel plates to be butt-welded, or the plate thickness (mm) of both the two steel plates when the two steel plates have the same plate thickness.

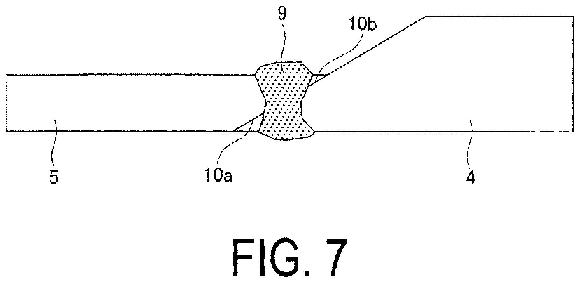

Note that in the present invention, the angle of the cut surface is an angle of the butted surface with respect to an upper surface of the steel plate to be butt-welded. That is, the angle of the cut surface means the angle $\theta_b$ in FIG. 4. In the steel plate having thinner plate thickness among the two steel plates to be butt-welded, the angle of the cut surface can correspond to a range from an angle of 10 deg that can be machined by the laser cutting to an angle of 90 deg that is a conventional cutting angle. However, when the angle is too small, a large amount of energy is required for the cutting, which is inefficient. Further, when the plate thickness is thick, since the butted surface becomes wide at the subsequent laser welding, incomplete melting 10a and 10b of the cut surfaces may remain at the welded front and rear surfaces after welding as illustrated in FIG. 7. It is preferable that the incomplete melting does not exist because the incomplete melting tend to become a starting point of fracture of the welded portion. On the other hand, when the angle is large, a gap may be generated when steel plates are butted against each other as in a conventional manner, which is likely to generate an underfill. Since the underfill is likely to become a starting point of fracture of the welded portion, like the incomplete melting, it is preferable that the underfill does not exist. Thus, in the method for laser welding according to the present invention, the cut surface of the steel plate having thinner plate thickness among the two steel plates to be butt-welded is cut by the laser beam cutting machine so as to have an angle $\theta$ (deg) equal to or more than 55.0 (deg) and less than 70.0 (deg). The angle $\theta$ is preferably equal to or more than 60.0 (deg) and equal to or less than 65.0 (deg). Note that when flat steel plates are butted against each other and laser-welded, an angle of the cut surface of the other steel plate (the steel plate having thicker plate thickness among the two steel plates to be butted welded) is preferably 180 - $\theta$ (deg), and thus, the other steel plate is also cut by the laser beam cutting machine so as to have this angle. Further, as a geometrical method, the angle $\theta$ (deg) of the cut surface can be set to 180 - $\theta$ (deg) by turning over the cut steel plate. Furthermore, when the two steel plates to be butt-welded have the same plate thickness, either of the cut surfaces may have the angle of $\theta$.

The method for laser welding according to the present invention can be applied to a range of the steel plate having thinner plate thickness among two steel plates to be butt-welded from 0.6 mm of the thinnest plate thickness to 3.2 mm of the thickest plate thickness to manufacture a tailor welded blank that is a laser-welded joint. This is because it is preferable that the plate thickness t of the steel plate having thinner plate thickness among the two steel plates to be butt-welded satisfies Expression (2) to form the welded portion 9 at the position illustrated in FIG. 4. In addition, when the plate thicknesses are the same, it is preferable that the plate thicknesses t of both steel plates satisfy Expression (2). In laser welding, when the plate thickness is thin, there is a concern that a problem of a burn-through (open hole) may accidentally occur. Thus, the plate thickness t of the steel plate having thinner plate thickness among the two steel plates to be butt-welded, or the plate thickness t of both steel plates when the two steel plates have the same plate thickness is preferably equal to or more than 1.2 mm. Further, when the plate thickness is thick, an end surface with relatively high dimensional accuracy can be obtained even by a conventional method, so that it is difficult to achieve the advantages of the present invention. Thus, the plate thickness t of the steel plate having thinner plate thickness among the two steel plates to be butt-welded, or the plate thickness t of both steel plates when the two steel plates have the same plate thickness is preferably equal to or less than 2.9 mm, and more preferably equal to or less than 2.3 mm. The plate thickness of the steel plate having thicker plate thickness among the two steel plates may be determined according to the specifications of a tailor welded blank, but is preferably equal to or less than 3.2 mm. The plate thickness is more preferably equal to or less than 2.9 mm.

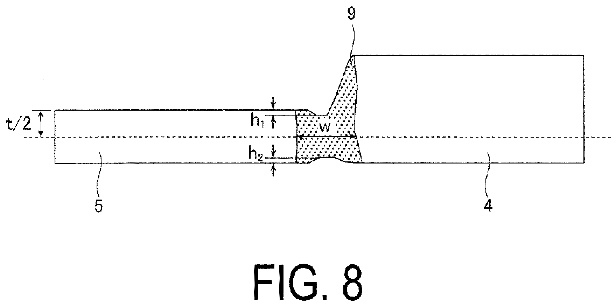

In addition, in order to reduce the occurrence of the incomplete melting 10a and 10b, it is preferable that a melting width w of the welded portion 9 of the laser welding at the central portion of the plate thickness of the steel plate 5, as illustrated in FIG. 8, satisfies the following Expression (3).

$$1.2w \geq t/\tan \theta \quad (3)$$

Here, t is the plate thickness (mm) of the steel plate having thinner plate thickness among the two steel plates to be butt-welded or the plate thickness (mm) of both the steel plates when the two steel plates have the same plate thickness, and w is the welding width (mm) at the central portion of the plate thickness of the steel plate having thinner plate thickness among the two steel plates or both the steel plates when the two steel plates have the same plate thickness. In addition, when the two steel plates to be butt-welded have different thicknesses, the angle of the cut surface of the steel plate having the thin plate thickness of the two steel plates is $\theta$ (deg), and when the two steel plates have the same plate thickness, the angle of the cut surface of either one of the two steel plates is $\theta$ (deg) .

Thus, the laser-welded joint to be manufactured by the method for laser welding according to the present invention is preferably manufactured by laser welding by using the laser beam welding machine so as to satisfy Expression (3).

Embodiment

A tailor welded blank for an A-pillar is an example of a preferred embodiment of the laser-welded joint manufactured by using the method for laser welding according to the present invention. In the embodiment of the tailor welded blank for the A-pillar, the present invention is used because a welding length is long, and a gap is likely to be generated between the steel plates butted against each other. That is, the laser-welded joint manufactured by using the method for laser welding according to the present invention is preferably a tailor welded blank.

Examples

Hereinafter, functions and effects of the present invention will be described with reference to Examples. However, the present invention is not limited to the following Examples.

A combination of plate thicknesses of the steel plates in each Example is any one of 0.6 mm and 0.8 mm, 1.2 mm and 1.6 mm, 2.0 mm and 2.3 mm, and 2.9 mm and 3.2 mm, and a width of the plates is 1500 mm. In Examples, among the steel plates to be butt-welded, the steel plate having a thicker plate thickness was the steel plate 4 (plate thickness: t1) and the steel plate having a thinner plate thickness was the steel plate 5 (plate thickness: t2). Moreover, Table 1 shows chemical compositions of steel types used for respective steel plates. These steel plates were subjected to laser cutting and butt laser welding as illustrated in FIGS. 1 to 4. A 10-kW fiber laser was used for laser cutting and laser welding. An output thereof was 2.0 to 8.0 kW.

[Table 1]

| | | | | | | | | | | | | (mass%) |
|---|---|---|---|---|---|---|---|---|---|---|---|---|
| Steel type | C | Si | Mn | P | s | Al | N | Cr | Nb | Ti | B | V |
| A | 0.027 | < 0.008 | 0.12 | 0.014 | 0.008 | 0.046 | 0.0034 | 0.031 | < 0.002 | < 0.001 | < 0.0001 | < 0.001 |
| B | 0.002 | < 0.008 | 0.13 | 0.018 | 0.010 | 0.039 | 0.0023 | 0.038 | 0.002 | 0.034 | 0.0004 | 0.002 |
| C | 0.150 | 0.02 | 0.65 | 0.012 | 0.006 | 0.038 | 0.0045 | 0.029 | 0.002 | 0.001 | 0.0001 | 0.001 |
| D | 0.085 | 0.35 | 1.65 | 0.025 | 0.002 | 0.045 | 0.0035 | 0.035 | 0.025 | 0.001 | 0.0002 | 0.045 |
| E | 0.160 | < 0.008 | 0.69 | 0.020 | 0.006 | 0.038 | 0.0033 | 0.011 | < 0.002 | 0.011 | < 0.0001 | 0.001 |
| F | 0.150 | 0.01 | 0.53 | 0.025 | 0.002 | 0.034 | 0.0041 | 0.010 | 0.002 | < 0.001 | 0.0001 | 0.001 |
| G | 0.150 | 0.02 | 0.63 | 0.015 | 0.004 | 0.028 | 0.0032 | 0.012 | 0.002 | 0.0015 | < 0.0001 | 0.001 |

(continued)

| | | | | | | | | | | | | (mass%) |
|---|---|---|---|---|---|---|---|---|---|---|---|---|
| Steel type | C | Si | Mn | P | s | Al | N | Cr | Nb | Ti | B | V |
| H | 0.160 | < 0.008 | 0.57 | 0.021 | 0.005 | 0.033 | 0.0038 | 0.014 | < 0.002 | 0.001 | < 0.0001 | 0.001 |

* Balance contains Fe and incidental impurities

Note that whether a welding state was good or not was determined by the following procedure.

(1) Cross-sectional macrostructure observation was performed at three points of a welding start portion, a central portion in the plate width, and a welding end portion of a produced joint, and melting widths w at the central portion of plate thickness of the steel plate 5 and underfill amounts h1 and h2 at the front and rear surfaces of the welded portion were measured at the butt laser welded portion 9 illustrated in FIG. 8. Further, it was confirmed whether or not there is an incomplete melting at the cut surface. The underfill amount was determined to be 0 when the front and rear surfaces were more convex than the steel plate 5.
(2) A Erichsen test was carried out at the three points of the welding start portion, the central portion in the plate width, and the welding end portion of the joint, and only when the weld metal did not fracture along the welding direction at any of the points, the joint was determined to be passed (o).
(3) Three tensile test pieces as specified in the JISZ2241 were taken from the joint, and tensile tests were performed. A case in which the base material fractured in all the tensile test pieces was determined to be passed (o).

Table 2 shows obtained results. Note that a dimensional difference a between the cut front and rear surfaces in Table 2 is a length (mm) by which an intersection of the front surface and the cut surface of the steel plate 5, which is a steel plate having a thinner plate thickness, deviates from an intersection of the cut surface and the rear surface in a direction perpendicular to the plate thickness direction, and can be geometrically calculated by $t2/\tan \theta$.

[Table 2]

| Test number | Steel plate 4 | | Steel plate 5 | | Angle of cut surface θ (deg) | Dimensional difference between cut front and rear surfaces a (mm) | Melting width w (mm) | Front surface underfill amount h1 (mm) | Rear surface underfill amount h2 (mm) | Incomplete melting at cut surface | Result of Erichsen test | Result of tensile test | Notes |
|---|---|---|---|---|---|---|---|---|---|---|---|---|---|
| | Steel type | Plate thickness t1 (mm) | Steel type | Plate thickness t2 (mm) | | | | | | | | | |
| 1 | A | 0.8 | B | 0.6 | 75.0 | 0.2 | 0.40 | 0.1 | 0.1 | Absence | × | × | Comparative example |
| 2 | A | 0.8 | B | 0.6 | 65.0 | 0.3 | 0.40 | 0.0 | 0.0 | Absence | ○ | ○ | Example of present invention |
| 3 | A | 0.8 | B | 0.6 | 60.0 | 0.3 | 0.40 | 0.0 | 0.0 | Absence | ○ | ○ | Example of present invention |
| 4 | A | 0.8 | B | 0.6 | 55.0 | 0.4 | 0.40 | 0.0 | 0.0 | Absence | ○ | ○ | Example of present invention |
| 5 | A | 0.8 | B | 0.6 | 50.0 | 0.5 | 0.40 | 0.0 | 0.0 | Presence | × | × | Comparative example |
| 6 | C | 1.6 | D | 1.2 | 75.0 | 0.3 | 0.78 | 0.2 | 0.1 | Absence | × | × | Comparative example |
| 7 | C | 1.6 | D | 1.2 | 65.0 | 0.6 | 0.78 | 0.0 | 0.0 | Absence | ○ | ○ | Example of present invention |
| 8 | C | 1.6 | D | 1.2 | 60.0 | 0.7 | 0.78 | 0.0 | 0.0 | Absence | ○ | ○ | Example of present invention |
| 9 | C | 1.6 | D | 1.2 | 55.0 | 0.8 | 0.78 | 0.0 | 0.0 | Absence | ○ | ○ | Example of present invention |
| 10 | C | 1.6 | D | 1.2 | 50.0 | 1.0 | 0.78 | 0.0 | 0.0 | Presence | × | × | Comparative example |
| 11 | E | 2.3 | F | 2.0 | 75.0 | 0.5 | 1.35 | 0.2 | 0.2 | Absence | × | × | Comparative example |

| Test number | Steel plate 4 | | Steel plate 5 | | Angle of cut surface θ (deg) | Dimensional difference between cut front and rear surfaces a (mm) | Melting width w (mm) | Front surface underfill amount h1 (mm) | Rear surface underfill amount h2 (mm) | Incomplete melting at cut surface | Result of Erichsen test | Result of tensile test | Notes |
|---|---|---|---|---|---|---|---|---|---|---|---|---|---|
| | Steel type | Plate thickness t1 (mm) | Steel type | Plate thickness t2 (mm) | | | | | | | | | |
| 12 | E | 2.3 | F | 2.0 | 65.0 | 0.9 | 1.35 | 0.0 | 0.0 | Absence | ○ | ○ | Example of present invention |
| 13 | E | 2.3 | F | 2.0 | 60.0 | 1.2 | 1.35 | 0.0 | 0.0 | Absence | ○ | ○ | Example of present invention |
| 14 | E | 2.3 | F | 2.0 | 55.0 | 1.4 | 1.35 | 0.0 | 0.0 | Absence | ○ | ○ | Example of present invention |
| 15 | E | 2.3 | F | 2.0 | 50.0 | 1.7 | 1.35 | 0.0 | 0.0 | Presence | × | × | Comparative example |
| 16 | G | 3.2 | H | 2.9 | 75.0 | 0.8 | 2.00 | 0.3 | 0.2 | Absence | × | × | Comparative example |
| 17 | G | 3.2 | H | 2.9 | 65.0 | 1.4 | 2.00 | 0.0 | 0.0 | Absence | ○ | ○ | Example of present invention |
| 18 | G | 3.2 | H | 2.9 | 60.0 | 1.7 | 2.00 | 0.0 | 0.0 | Absence | ○ | ○ | Example of present invention |
| 19 | G | 3.2 | H | 2.9 | 55.0 | 2.0 | 2.00 | 0.0 | 0.0 | Absence | ○ | ○ | Example of present invention |
| 20 | G | 3.2 | H | 2.9 | <u>50.0</u> | 2.4 | 2.00 | 0.0 | 0.0 | Presence | × | × | Comparative example |

* Values indicated with underline are outside the scope of the invention

EP 4 620 610 A1

As shown in Table 2, Examples of the present invention, that is, the laser-welded joints manufactured by using the method for laser welding according to the present invention were laser-welded joints with high quality in which an effect of suppressing the variation in butt gap was obtained where an underfill was not generated, the weld metal does not fracture along the welding direction in the Erichsen test, the base metal fractured in the tensile test, .

On the other hand, among Comparative Examples, in each of No. 1, No. 6, No. 11, and No. 16, since the angle of the cut surface was large and a gap was formed at the time of butting, an underfill was generated, the weld metal fractured along the welding direction in the Erichsen test, and the weld metal also fractured in the tensile test.

Further, among Comparative Examples, in each of No. 5, No. 10, No. 15, and No. 20, the angle of the cut surface was small, incomplete melting of the cut surface was generated, the weld metal fractured along the welding direction in the Erichsen test, and the weld metal also fractured in the tensile test.

| | |
|---|---|
| 1a: | Laser oscillator |
| 1b: | Laser oscillator |
| 1c: | Laser oscillator |
| 2a: | Transmission system |
| 2b: | Transmission system |
| 2c: | Transmission system |
| 3a: | Machining head for cutting |
| 3b: | Machining head for cutting |
| 3c: | Machining head for welding |
| 4: | Steel plate |
| 5: | Steel plate |
| 6a: | Laser beam for cutting |
| 6b: | Laser beam for cutting |
| 6c: | Laser beam for welding |
| 7a: | Cut portion |
| 7b: | Cut portion |
| 8a: | Assist gas |
| 8b: | Assist gas |
| 9: | Welded portion |
| 10a: | Incomplete melting |
| 10b: | Incomplete melting |
| $d_a$: | Cutting direction |
| $d_b$: | Cutting direction |
| $d_c$: | Welding direction |
| $\theta_a$: | Angle of cut surface |
| $\theta_b$: | Angle of cut surface |
| $\theta$: | Angle of cut surface |
| t: | Plate thickness |
| w: | Melting width at central portion of plate thickness |
| h1: | Underfill amount at front surface |
| h2: | Underfill amount at rear surface |

**Claims**

1. A method for laser welding comprising:

   cutting each of two steel plates to be butt-welded by using a laser beam; and
   butt-welding the two steel plates cut by using the laser beams, wherein
   the cutting cuts such that an angle of a cut surface of one of the steel plates is $\theta$ (deg) and an angle of a cut surface of the other one of the steel plates is 180 - $\theta$ (deg) and the $\theta$ satisfies Expression (1):

$$55.0 \leq \theta < 70.0 \quad (1),$$

   where, when the two steel plates to be butt-welded have different plate thicknesses, the angle of the cut surface of the steel plate having a thinner plate thickness is $\theta$ (deg), and when the two steel plates have an identical plate thickness, the angle of the cut surface of either one of the steel plates is $\theta$ (deg).

**2.** The method for laser welding according to claim 1, wherein
the plate thickness t (mm) of the steel plate having the thinner plate thickness among the two steel plates to be butt-welded or, when the two steel plates have the identical plate thickness, the plate thickness t (mm) of both the two steel plates satisfies following Expression (2):

$$0.6 \leq t \leq 3.2 \quad (2).$$

**3.** The method for laser welding according to claim 1, wherein
the welding is performed such that a welded portion of the laser welding satisfies following Expression (3):

$$1.2w \geq t/\tan \theta \quad (3),$$

where w is a melting width (mm) and t is the plate thickness (mm) of the steel plate having the thinner plate thickness among the two steel plates to be butt-welded or, when the two steel plates have an identical plate thickness, the plate thickness (mm) of both the two steel plates.

**4.** The method for laser welding according to claim 2, wherein
the welding is performed such that a welded portion of the laser welding satisfies following Expression (3):

$$1.2w \geq t/\tan \theta \quad (3),$$

where w is a melting width (mm).

**5.** The method for laser welding according to claim 1, wherein
the butt-welding includes, when the two steel plates to be butt-welded have different plate thicknesses, arranging the steel plates in a horizontal direction to butt with each other while positioning a portion with an acute angle in a cross section of the steel plate having a thicker plate thickness and a portion with an obtuse angle in a cross section of the steel plate having the thinner plate thickness at lower sides of the respective steel plates and aligning heights of lower surfaces of the steel plates, and then welding the steel plates by irradiating a laser beam from an upper side in a vertical direction while aiming at a position of a center of the plate thickness of the butted surface of the steel plate having the thinner plate thickness.

**6.** The method for laser welding according to claim 2, wherein
the butt-welding includes, when the two steel plates to be butt-welded have different plate thicknesses, arranging the steel plates in a horizontal direction to butt with each other while positioning a portion with an acute angle in a cross section of the steel plate having a thicker plate thickness and a portion with an obtuse angle in a cross section of the steel plate having the thinner plate thickness at lower sides of the respective steel plates and aligning heights of lower surfaces of the steel plates, and then welding the steel plates by irradiating a laser beam from an upper side in a vertical direction while aiming at a position of a center of the plate thickness of the butted surface of the steel plate having the thinner plate thickness.

**7.** A method for manufacturing a laser-welded joint comprising:
manufacturing the laser-welded joint by using the method for laser welding according to any one of claims 1 to 6.

**8.** The method for manufacturing the laser-welded joint according to claim 7, wherein
the laser-welded joint is a tailor welded blank.

FIG. 1

FIG. 2

# FIG. 3

FIG. 4

FIG. 5

# FIG. 6

# FIG. 7

FIG. 8

## INTERNATIONAL SEARCH REPORT

| International application No. |
| --- |
| **PCT/JP2023/042233** |

| A. | CLASSIFICATION OF SUBJECT MATTER |
| --- | --- |

***B23K 26/21***(2014.01)i; ***B23K 26/38***(2014.01)i
FI:   B23K26/21 F; B23K26/38 A

According to International Patent Classification (IPC) or to both national classification and IPC

| B. | FIELDS SEARCHED |
| --- | --- |

Minimum documentation searched (classification system followed by classification symbols)

B23K26/21; B23K26/38

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2019-524447 A (SHILOH INDUSTRIES, INC) 05 September 2019 (2019-09-05) paragraph [0027], fig. 4A, 4B | 1-4, 7-8 |
| A | | 5-6 |
| Y | WO 02/060637 A1 (OUTOKUMPU OYJ) 08 August 2002 (2002-08-08) p. 3, lines 22-26, p. 4, line 30 to p. 5, line 3, fig. 3, 4 | 1-4, 7-8 |
| A | | 5-6 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **07 December 2023** | **26 December 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
**Information on patent family members**

International application No.

**PCT/JP2023/042233**

| Patent document cited in search report | | | Publication date (day/month/year) | Patent family member(s) | | | Publication date (day/month/year) |
|---|---|---|---|---|---|---|---|
| JP | 2019-524447 | A | 05 September 2019 | US | 2019/0232424 | A1 | |
| | | | | paragraph [0030], fig. 4A, 4B | | | |
| | | | | WO | 2018/027074 | A1 | |
| | | | | KR | 10-2019-0025720 | A | |
| | | | | CN | 109562490 | A | |
| WO | 02/060637 | A1 | 08 August 2002 | CN | 1486230 | A | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012135796 A